# EUROPEAN PATENT SPECIFICATION

(11) **EP 3 724 032 B1**
(45) Date of publication and mention of the grant of the patent: **21.07.2021**
(21) Application number: 18908266.2
(22) Date of filing: 06.12.2018
(51) Int. Cl.: B60R 3/00, B60R 19/52

(54) **AN ADJUSTABLE GRILLE MECHANISM**
VERSTELLBARE GRILLVORRICHTUNG
MÉCANISME DE CALANDRE AJUSTABLE

(30) Priority: 14.12.2017 TR 201720353
(43) Date of publication of application: 21.10.2020
(73) Proprietor: FORD OTOMOTIV SANAYI ANONIM SIRKETI, Istanbul (TR)
(72) Inventor: ERBIL, Egemen, 34885 Sancaktepe/Istanbul (TR); YILMAZ, Engin, 34885 Sancaktepe/Istanbul (TR); OZTURK, Meltem, 34885 Sancaktepe/Istanbul (TR); TANER, Kaan, 34885 Sancaktepe/Istanbul (TR); CASSIS, Raphael, Santo Andre Sp Santo (BR)
(74) Representative: Dericioglu, E. Korhan
(86) International application number: PCT/TR2018/050769
(87) International publication number: WO 2019/190423

(56) References cited:
- CN-B- 102 407 818
- CN-Y- 2 789 078
- CN-Y- 201 405 813
- JP-A- 2008 260 478
- US-A1- 2013 154 229

## Description

### Field of the Invention

The present invention relates to an adjustable and foldable grille mechanism, which is provided on the bumpers of the vehicles for ventilation of the engine, and which, when the user prefers, can be opened to form an opening for the step.

### Background of the Invention

The front bumpers of heavy commercial vehicles include a step and a front grille. The step is used to step thereon when it is desired to reach the windshield or the upper areas on the front parts of the vehicle. The front grille is located near the step and usually right above the step. The front grille is used to ventilate the vehicle engine. In the current systems, when it is desired to step on the step, the front grille is moved thereby providing access to the step. The movement of the front grille is often based on rotation and locking via a lug, hook, poppet etc. However, the presence of the step creates wind resistance due to the intake of air into the opening above the step. The resulting wind resistance increases the fuel consumption. In daily use, when the user prefers to reach the windshield, s/he reaches it by stepping on the said step. In addition to the fact that the step increases the wind resistance, external factors such as rain, snow, dust and mud can accumulate in the space between the step and the front grille. On the other hand, the opening in front of the front grille causes visual pollution.

In the current applications, extra materials are used to provide steps in front of the front grille. The front grille mechanism of the present invention can be used as a step by the user without the need for providing a space and using an extra step mechanism due to its foldable structure.

United States patent document no. US9505364B1 with a priority date of 23.07.2015, an application known in the state of the art, discloses a guard apparatus for vehicles. The apparatus in the said document comprises a guard structure comprising a plurality of bars joined together. A guard mounting structure mounts the guard structure to the vehicle in a manner permitting movement of the structure between a first position and a second position. A guard securing structure secures the guard structure in the first position and releases the guard structure to move toward the second position. The guard securing structure may secure the guard structure in the first position using magnetic attraction force. When a force that will overcome the magnetic attraction force of the guard securing structure is applied, the guard structure can be released from the first position to the second positions. The said invention is provided on the front part of the vehicles. The guard structure provided in front of the front grille is tiltable. A guard securing structure is provided for securing the said guard apparatus at a position. In the aid invention, the bumper guard apparatus provided in front of the front grille is tiltable. The front grille is left fixed. The invention of the present invention includes a foldable cover which is connected to the front grille and is integrated with the front grille, a front grille cover located on the foldable cover, and a mechanism lever which enables simultaneous operation of the two covers. The guard apparatus of the present invention can be folded and unfolded by means of the mechanism lever operating simultaneously with the cover. The front grille cover can be detached from the front grille and opened with the force applied to the foldable cover.

United States patent document no. US20090212581A1 with a priority date of 15.01.2008, an application known in the state of the art, discloses a front grill guard apparatus for vehicles with bumpers. The front grill guard apparatus disclosed in the said document comprises a front grill guard pivotally attached at a bottom portion thereof to the bumper about a horizontal pivot axis located vertically between the top and bottom edges of the bumper. This way, the front grill guard can pivot about the pivot axis from an upright raised position to a lowered position extending horizontally forward from the bumper. The position of the grill guard can be maintained by means of a lock mechanism. The said invention is used on the front part of the vehicles and enables the front grill to be opened and closed. The said front grill guard is attached to the bumper and can rotate around its horizontal axis from its edge where it is attached to the bumper. When the bumper guard rotates, it is folded and opened in front of the front grill. The said invention does not disclose a guard being used as a step upon being opened and closed. The invention of the present invention includes a foldable cover which is connected to the front grille and is integrated with the front grille, a front grille cover located on the foldable cover, and a mechanism lever which enables simultaneous operation of the two covers. The guard apparatus of the present invention can be folded and opened by means of the mechanism lever operating simultaneously with the cover. The front grille cover can be detached from the front grille and opened with the force applied to the foldable cover. In the invention of the present invention, the front grille itself serves as a step upon being opened and closed.

Chinese patent document no. CN106627381A with a priority date of 21.10.2016, an application known in the state of the art, discloses a pedal mechanism for cleaning the windshield of a truck. The mechanism disclosed in the said document comprises a base and a pedal mechanism. The base comprises a base connecting part and a base fixing part, and the base fixing part is fixed to the vehicle body. The pedal comprises a stepping part and a pedal connecting part, and one side of the pedal connecting part is fixedly connected to the stepping part. The other side of the pedal connecting part is rotatably connected to the base connecting part. The pedal is opened and folded relative to the base. The said invention is used on the front part of the vehicles and includes a step to step on when the front grille is opened. The foldable mechanism in the said invention is used to enable the user to reach the windshield of the vehicle. There is provided a pedal in this invention. The pedal is located in front of the front grille. The pedal can be folded and unfolded in front of the front grille. However this invention does not mention folding unfolding of the front grille. The invention of the present invention includes a foldable cover which is connected to the front grille and is integrated with the front grille, a front grille cover located on the foldable cover, and a mechanism lever which enables simultaneous operation of the two covers. The guard apparatus of the present invention can be folded and opened by means of the mechanism lever operating simultaneously with the cover. The front grille cover can be detached from the front grille and opened with the force applied to the foldable cover. In the invention of the present invention, the front grille itself serves as a step upon being opened and closed.

United States patent document no. US20130154229A1 showing the preamble of claim 1 discloses a bumper step for heavy-duty trucks. The bumper comprises a main bracket provided on a front lower portion of a vehicle. The lower end of a first step is hinged to the main bracket such that the first step is rotatable and deployable downwards, and the first step is fixed in a deployed position. There is also a second step provided behind the first step, wherein an upper end of the second step is hinged to the main bracket such that the second step is rotatable and deployable upwards, and the second step is fixed in position above the first step. However, this invention does not mention any one of actuation, motion lever and spring elements.

The foldable front grille mechanism of the invention of the present application comprises a fixed front grille, a front grille cover being opened from within the fixed front grille, a foldable cover connected to the front grille cover and a step provided inside the foldable cover. There is provided a mechanism lever which enables the foldable cover and the front grille cover to be opened and closed at the same time to enable the front grille cover to open and the step to move out. When the mechanism is open, it is prevented from being closed without applying force thereon. In the invention of the present application, the front grille placed on the vehicle bumper can be used directly as a step upon being opened and closed.

There are no explanations in the state of the art pertaining to the technical features of the present invention and technical effects provided by the present invention. The state of the art applications do not include a foldable front grille mechanism, which comprises a fixed front grille, a front grille cover being opened from within the fixed front grille, a foldable cover connected to the front grille cover and a step provided inside the foldable cover, and which enables simultaneous operation of the front grille cover and foldable cover by means of a mechanism lever and serves as a foldable step by getting detached from the front grille.

### Objectives of the Invention

The objective of the present invention is to provide a bumper with an adjustable grille mechanism, which is used for ventilation of the engine and can be opened and closed, and which, when opened, provides a step to enable the user to reach the windshield.

Another objective of the present invention is to provide a bumper with an adjustable grille mechanism which serves as a step upon being opened and closed in case of need thanks to the fact that the front grille is foldable.

A further objective of the present invention is to provide a bumper with an adjustable grille mechanism which, since it is foldable, is closed when not used thereby minimizing wind resistance and providing fuel economy.

### Summary of the Invention

A bumper with an adjustable grille mechanism; which is developed to fulfill the objectives of the present invention, and which is defined in the first claim and the claims dependent thereon; comprises a fixed grille, step, movable grille, pores, actuator, motion lever and resilient member. When the user prefers to step on the step to reach the front part of the vehicle, a step opening is formed in front of the step. The grille mechanism must be opened to form the step opening. A force is applied to the actuator to switch the grille mechanism from the closed position to the open position. The user holds the holding space of the actuator and applies force on the actuator. The actuator makes a rotational movement on the fixed grille under the influence of the force applied thereon. The actuator is opened by making a rotational movement on the fixed grille towards the inside of the vehicle. The movable grille, to which the motion lever is connected, also rotates with the rotational movement of the actuator. The movable grille is opened by rotating in the opposite direction with the actuator. Upon opening of the movable grille and the actuator, a step opening is formed in front of the step. When the actuator is opened, it is ensured to remain in the fixed position by means of the resilient member. When it is preferred to close the step after use by the user, a force is applied to the actuator in the closing direction. With the effect of the applied force, the actuator returns to its original position resting on the fixed grille and becoming integrated with it. During the closing movement of the actuator, the movable grille also rotates and closes on the fixed grille.

### Detailed Description of the Invention

An adjustable grille mechanism developed to fulfill the objectives of the present invention is illustrated in the accompanying figures, in which:
- **Figure 1.**: is a perspective view of a front grille system used in the prior art.
- **Figure 2.**: is a perspective view of the grille mechanism mounted on the bumper.
- **Figure 3.**: is a perspective view of the closed position of the grille mechanism together with the middle bumper.
- **Figure 4.**: is a perspective view of the closed position of the grille mechanism together with the middle bumper from another angle.
- **Figure 5.**: is a perspective view of the open position of the grille mechanism together with the middle bumper.
- **Figure 6.**: is a perspective view of the open position of the grille mechanism together with the middle bumper from another angle.

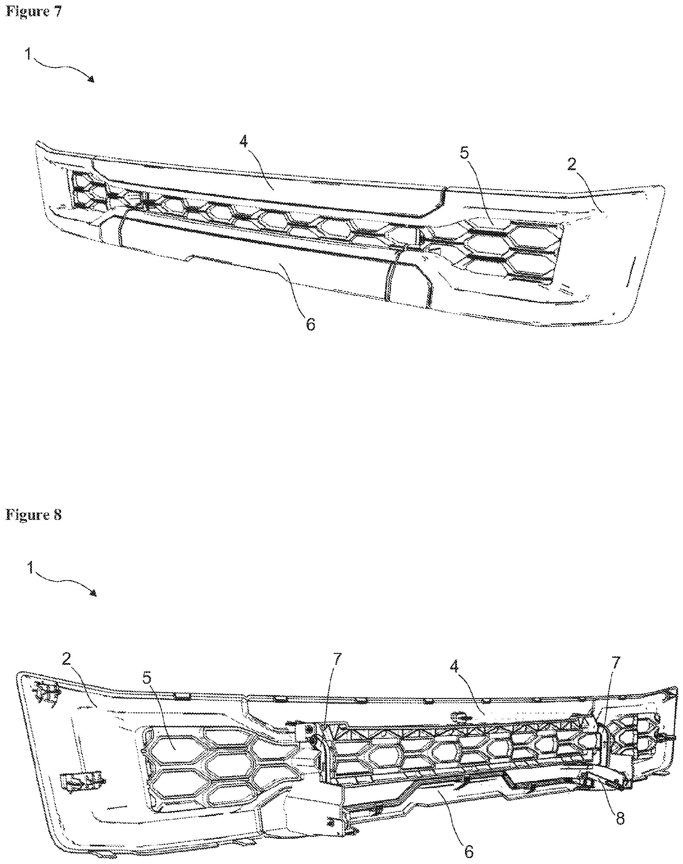

- **Figure 7.**: is a perspective view of the closed position of the grille mechanism.
- **Figure 8.**: is a perspective view of the closed position of the grille mechanism from another angle.
- **Figure 9.**: is a magnified view of the movable grille, actuator and fixed grille when the grille mechanism is closed.
- **Figure 10.**: is a magnified view of the movable grille, actuator and fixed grille when the grille mechanism is closed from another angle.
- **Figure 11.**: is a perspective view of the open position of the grille mechanism.
- **Figure 12.**: is a perspective view of the open position of the grille mechanism from another angle.
- **Figure 13.**: is a magnified view of the movable grille, actuator and fixed grille when the grille mechanism is open.
- **Figure 14.**: is a magnified view of the movable grille, actuator and fixed grille when the grille mechanism is open from another angle.

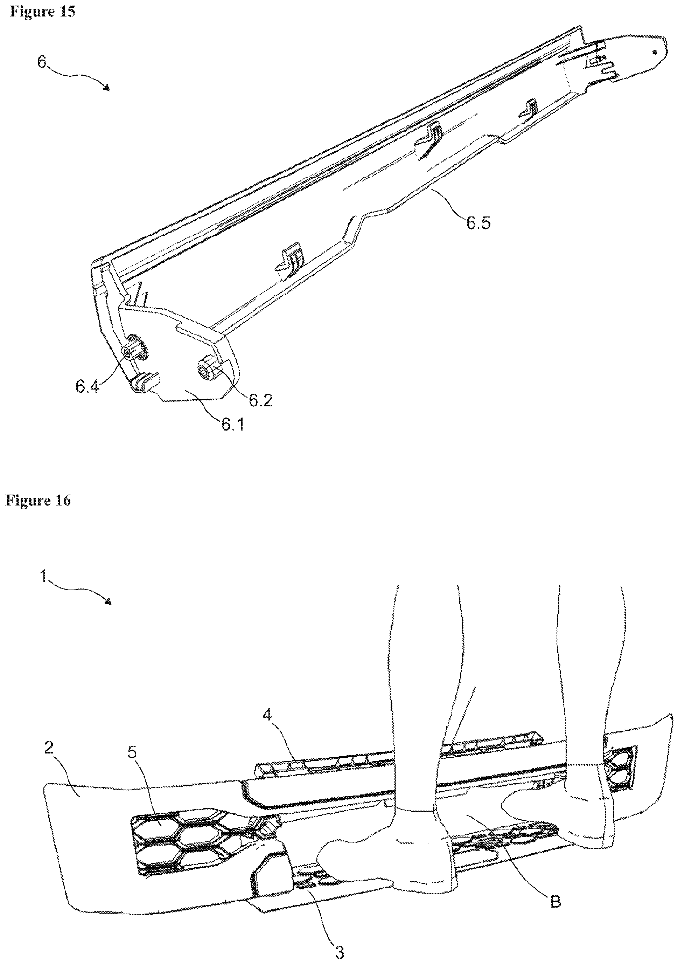

- **Figure 15.**: is a perspective view of the actuator.
- **Figure 16.**: is a view of the state wherein the user steps on the step when the grille mechanism is open.

The components shown in the figures are given reference numbers as follows:
**1.** Grille mechanism
**2.** Fixed grille
   **2.1.** Upper connection plate **2.1.1.** Rotation hole
   **2.2.** Lower connection plate
      **2.2.1.** Rotation extension
      **2.2.2.** Obstruction extension
**3.** Step
**4.** Moveable grille
   **4.1.** Connection extension
   **4.2.** Upper movement extension
**5.** Pore
**6.** Actuator
   **6.1.** Connection plate
   **6.2.** Connection hole
   **6.3.** Blocking lug
   **6.4.** Lower movement extension
   **6.5.** Holding space
**7.** Motion lever
   **7.1.** Motion hole
**8.** Resilient member
   **8.1.** Engagement hole
**T.** Middle bumper
**B.** Step opening

A bumper having a grille mechanism (1) for providing ventilation, and which is foldable and enables to provide a step opening (B) for the step (3) by being opened when the user prefers to reach the front part of the vehicle, essentially comprises
- at least one fixed grille (2) fixedly arranged on the middle bumper (T),
- at least one step (3) which is positioned on the middle bumper (T) so as to remain between the middle bumper (T) and the fixed grille (2), and which enables the user to step thereon to reach the front part of the vehicle,
- at least one movable grille (4), which is connected to the fixed grille (2), and which, by making a rotational movement around the central axis from its ends that are connected to the fixed grille (2), can be opened and closed on the fixed grille (2),
- at least one actuator (6), which is connected to the fixed grille (2) and the movable grille (4), moves simultaneously with the moveable grille (4), can be opened and closed on the fixed grille (2) by making a rotational movement around the central axis from the ends thereof connected to the fixed grille (2) when a force is applied thereon, and forms a step opening (B) for the step (3) when opened together with the moveable grille (4),
- at least one motion lever (7), which is connected to the moveable grille (4) from one end thereof and to the actuator (6) from the other end thereof, and which, when the moveable grille (4) and the actuator (6) are being opened and closed, enables them to trigger each other's movement and enables the moveable grille (4) to be opened and closed together with the actuator (6) simultaneously during opening and closing of the actuator (6) on the fixed grille (2),
- at least one resilient member (8), which prevents the moveable grille (4) and the actuator (6) on the fixed grille (2) from being closed without exertion of a force when they are open and prevents them from being opened without exertion of a force when they are closed.

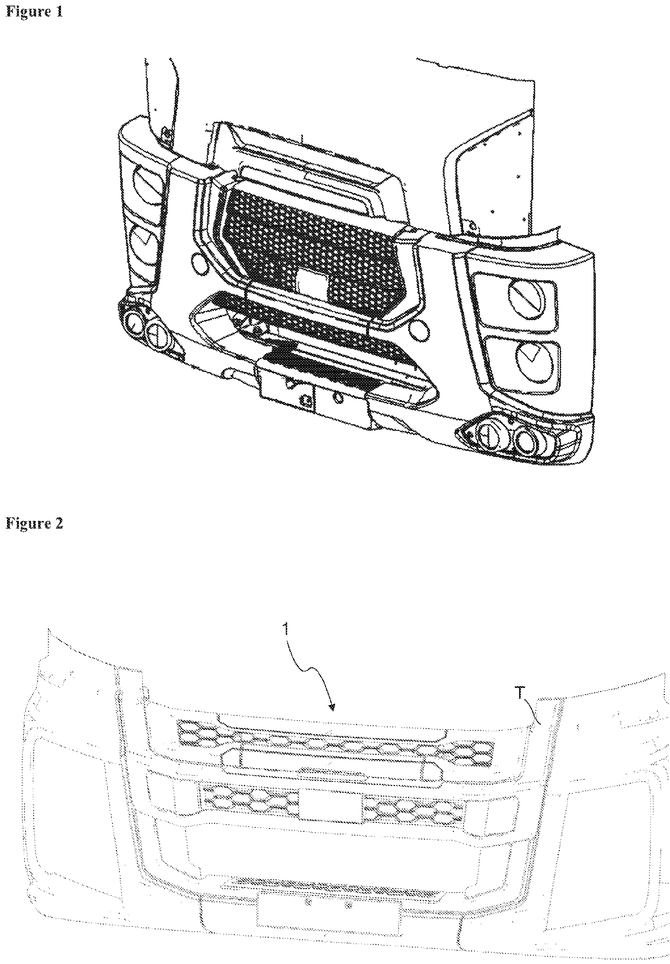

The grille mechanism (1) of the present application is used to provide ventilation by being mounted on the middle bumpers (T) of heavy commercial vehicles. In heavy commercial vehicles, when the user prefers to reach the vehicle windshield or the front part of the vehicle, s/he tries to do so by stepping on the front part of the bumper. However, stepping on the front part of the bumper is not enough to reach the windshield of the vehicle. There is no step opening (B) in the prior art for the user to place a foot on at the upper parts of the bumper when s/he steps on the low front part of the bumper. The problem in the prior art is shown in Figure 1. The grille mechanism (1) is positioned on the middle buffer (T) located in the middle of the vehicle's large bumper (Figure 2). The grille mechanism (1) opens when the user prefers to reach the front of the vehicle, thereby creating a step opening (B) for the step (3). The grille mechanism (1) comprises a fixed grille (2), step (3), movable grille (4), pore (5), actuator (6), motion lever (7) and resilient member (8).

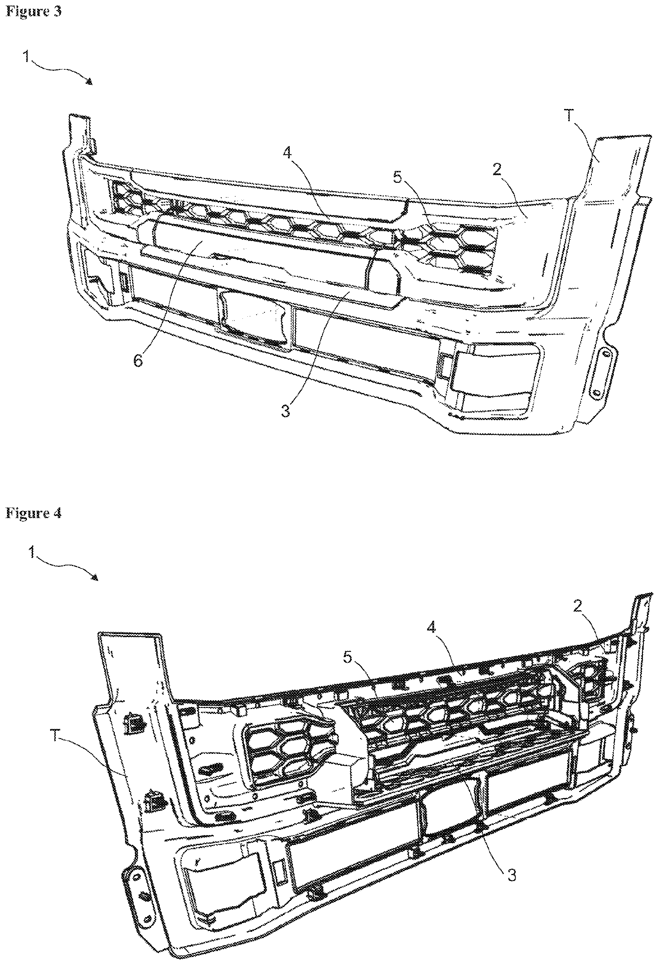

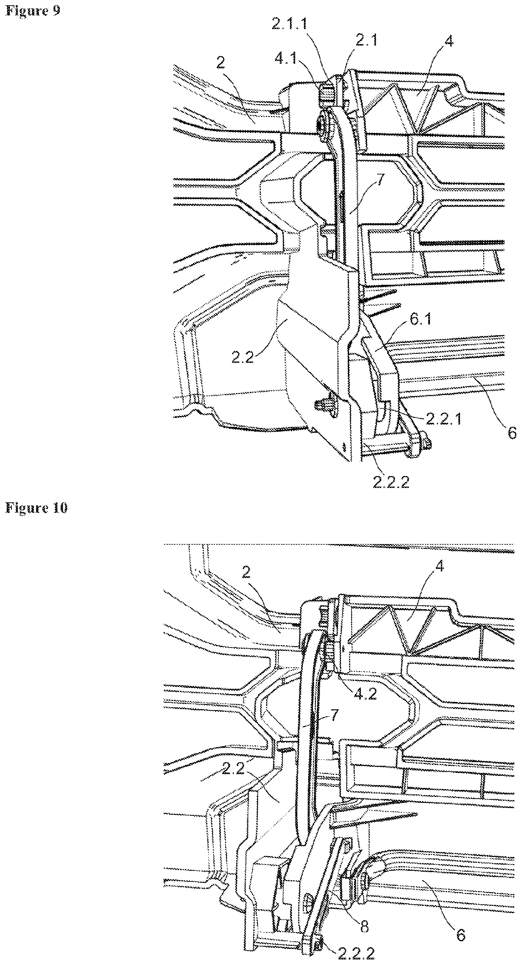

In one embodiment of the present invention, the fixed grille (2) in the grille mechanism (1) is fixedly arranged in the middle part of the middle bumper (T) (Figures 3-5). The fixed grille (2) preferably has a quadrangular geometric form and has pores (5) thereon. The pores (5) are provided on the fixed grille (2) to enable ventilation of the engine compartment. The movable grille (4) and the actuator (6) are connected to the fixed grille (2). The fixed grille (2) has a step opening (B) with a quadrangular geometric form preferably on the center thereof. The movable grille (4) and the actuator (6) are connected to the fixed grille (2) so as to open and close the said step opening (B). There is a step (3) provided on the lower surface of the fixed grille (2) from which it is connected to the front bumper (T). The fixed grille (2) step opening (B) is fixed to the front bumper (T) such that it is above to the step (3). The fixed grille (2) comprises an upper connection plate (2.1) and a lower connection plate (2.2) (Figure 9). The upper connection plate (2.1) enables connection of the moveable grille (4) to the fixed grille (2). The upper connection plate (2.1) is located on the part of the fixed grille (2) facing inside of the vehicle. The upper connection plate (2.1) preferably has a quadrangular geometric form and is located on both ends of the fixed grille (2). The upper connection plate (2.1) is located on the upper part of the fixed grille (2) such that it is perpendicular to the fixed grille (2). The upper connection plate (2.1) comprises a rotation hole (2.1.1). The rotation hole (2.1.1) has a circular geometric form and is located preferably on the center of the upper connection plate (2.1). The movable grille (4) is connected to the fixed grille (2) by being engaged to the rotation hole (2.1.1) on the upper connection plate (2.1). The moveable grille (4) can make a rotational movement around the central axis of the rotation hole (2.1.1) from the end thereof that is engaged to the rotation hole (2.1.1). The lower connection plate (2.2) enables connection of the actuator (6) to the fixed grille (2). The lower connection plate (2.2) is preferably in line with the upper connection plate (2.1) and is located on the surface of the fixed grille (2) facing inside the vehicle. The upper connection plate (2.2) preferably has a quadrangular geometric form and is located on both ends of the fixed grille (2). The lower connection plate (2.2) is located on the lower part of the fixed grille (2) and is perpendicular to the fixed grille (2). The upper connection plate (2.1) and the lower connection plate (2.2) are preferably aligned with each other and produced as a single piece with the fixed grille (2). The lower connection plate (2.2) comprises a rotation extension (2.2.1) and an obstruction extension (2.2.2). The rotation extension (2.2.1) preferably has a cylindrical geometric form and has an opening in the center thereof. The rotation extension (2.2.1) is positioned to be close to the free end of the lower connection plate (2.2). The rotation extension (2.2.1) is placed on the lower connection plate (2.2) such that it faces the inner surface of the fixed grille (2). The rotation extension (2.2.1) on the lower connection plate (2.2) is positioned to be concentric with it. The rotation extension (2.2.1) enables connection of the actuator (6) to the fixed grille (2). The actuator (6) is connected to the fixed grille (2) by being engaged to the rotation extension (2.2.1) from one end thereof. The actuator (6) is fitted into the opening on the rotation extension (2.2.1) by means of a connecting member and thereby is connected to the fixed grille (2). The actuator (6) can make a rotational movement around the central axis in the rotation extension (2.2.1) from the end thereof that is engaged to the rotation extension (2.2.1). The obstruction extension (2.2.2) is located at a position close to the rotation extension (2.2.1) and is in line with the rotation extension (2.2.1). The obstruction extension (2.2.2) preferably has a cylindrical geometric form. The obstruction extension (2.2.2) enables connection of the resilient member (8) to the fixed grille (2). The resilient member (8) is fixed to the obstruction extension (2.2.2) from one end thereof.

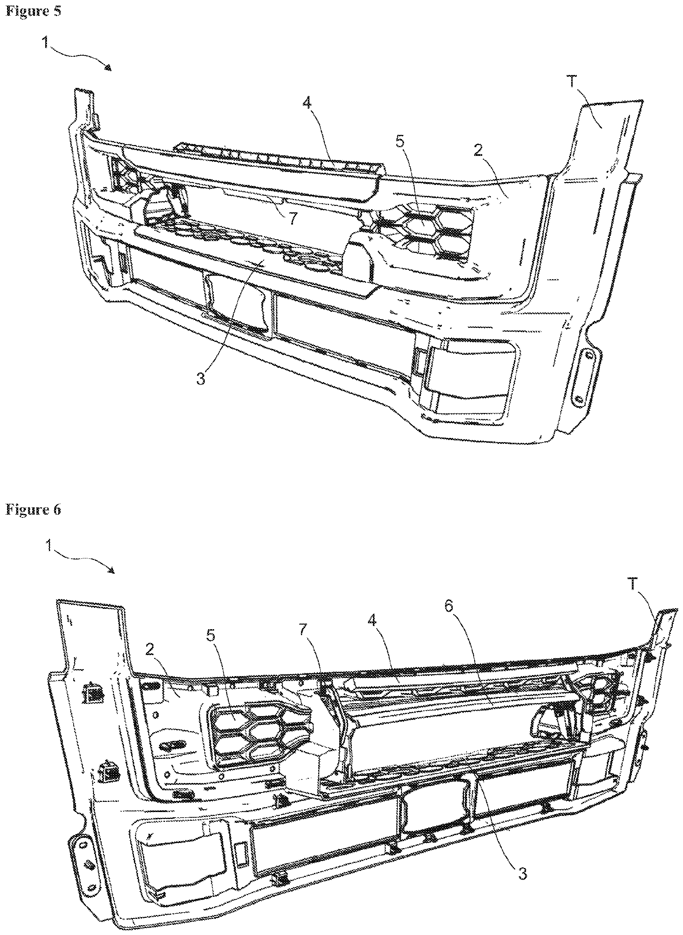

In one embodiment of the present invention, the step (3) in the grille mechanism (1) is positioned on the middle bumper (T) so as to be located between the middle bumper (T) and the fixed grille (2) (Figure 5). The step (3) enables the user to step thereon to reach the front part of the vehicle. The step (3) is preferably made of a material which can undergo elastic deformation having high rigidity in order to be able to carry the weight of the user. The step (3) is made of a material which is more rigid than the front bumper (T). When the user prefers to use the step (3), the step opening (B) is formed. The step opening (B) is formed upon opening of the actuator (6) and the movable grille (4) located on the fixed grille (2).

In one embodiment of the invention, the moveable grille (4) provided in the grille mechanism (1) is connected to the fixed grille (2). The movable grille (4) can be opened and closed on the fixed grille (2) by making a rotational movement about the central axis from its ends connected to the fixed grille (2). The movable grille (4) is located on the upper part of the fixed grille (4) in alignment with the step (3). The movable grille (4) comprises a connection extension (4.1) and an upper movement extension (4.2). The moveable grille (4) preferably has a rectangular geometric form and has pores (5) thereon. The pores (5) enable ventilation of the vehicle engine compartment. When the movable grille (4) is closed on the fixed grille (2), the pores (5) on the movable grille (4) and the pores (5) on the fixed grille (2) are integrated with each other. The connection extension (4.1) is preferably located at both ends of the movable grille (4). The connection extension (4.1) preferably has a cylindrical geometric form. The movable grille (4) is connected to the fixed grille (2) via the connection extension (4.1) (Figure 9). The movable grille (4) is connected to the fixed grille (2) by engaging the connection extension (4.1) to the rotation hole (2.1.1) (Figure 9-10). The connection extension (4.1) of the moveable grille (4) can make a rotational movement around the central axis in the rotation hole (2.1.1). The connection extension (4.1) enables the moveable grille (4) to make a rotational movement on the fixed grille (2). The connection extension (4.1) is positioned on the side surfaces of the movable grille (4) so as to face outwards. The upper movement extension (4.2) preferably has a cylindrical geometric form and is positioned in line with the connection extension (4.1). The upper movement extension (4.2) enables connection of the motion lever (7) to the moveable grille (4). The motion lever (7) is engaged to the upper movement extension (4.2) from one end thereof. The motion lever (7) is fixed to the moveable grille (4) upon being engaged to the upper movement extension (4.2). The moveable grille (4) can make an angular rotational movement towards the inside of the vehicle preferably from the connection extension (4.1). The motion lever (7) is connected to the actuator (6) from the other end thereof, thereby enabling the actuator (6) and the movable grille (4) to move simultaneously. The movable grille (4) can move depending on the movement of the actuator (6).

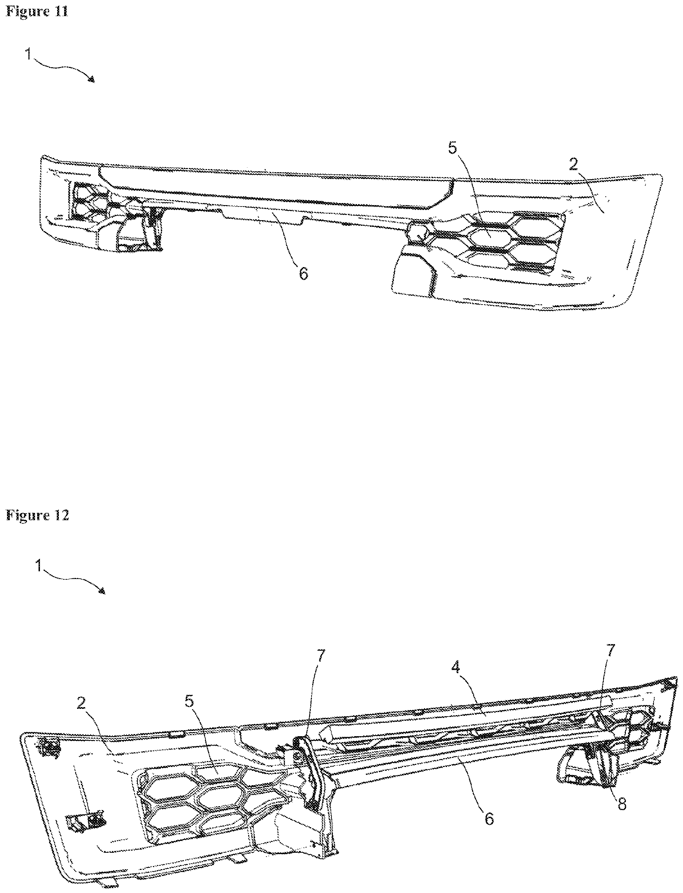

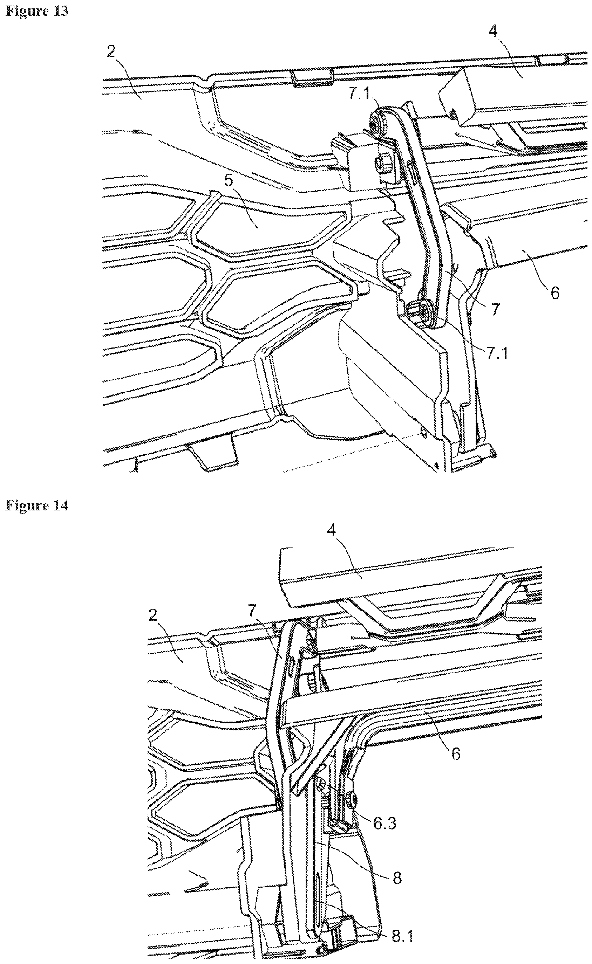

In one embodiment of the invention, the actuator (6) provided in the grille mechanism (1) is connected to the fixed grille (2) and the moveable grille (4) (Figures 9-11). The actuator (6) moves simultaneously with the moveable grille (4). The actuator (6) is positioned on the fixed grille (2) such that it will be on the upper part of the moveable grille (4). The actuator (6) preferably contacts the step (3). When a force is applied thereon, the actuator (6) can be opened and closed on the fixed grille (2) by making a rotational movement about the central axis from its ends connected to the fixed grille (2). The actuator (6) produces a step opening (B) for the step (3) when it is opened together with the moveable grille (4). The actuator (6) comprises a connection plate (6.1), connection hole (6.2), blocking lug (6.3), lower movement extension (6.4) and holding space (6.5) (Figure 14). The actuator (6) preferably has a rectangular geometric form and includes connection plates (6.1) in upright position at both ends thereof. The connection plate (6.1) enables connection of the actuator (6) to the motion lever (7) and the fixed grille (2). The connection hole (6.2) is located on the connection plate (6.1). The connection hole (6.2) is preferably located within an extension having a cylindrical geometric form. The connection hole (6.2) enables connection of the actuator (6) to the fixed grille (2). The cylindrical extension comprising the connection hole (6.2) is preferably positioned close to the free end of the connection plate (6.1). The actuator (6) is connected to the fixed grille (2) by engaging the connection hole (6.2) to the rotation extension (2.2.1) provided on the lower connection plate (2.2). The rotation extension (2.2.1) that is engaged to the connection hole (6.2) is fixed to the actuator (6) by means of a connecting member. The rotation extension (2.2.1) can make a rotational movement around the central axis in the connection hole (6.2). The connection hole (6.2) enables the actuator (6) to make a rotational movement on the fixed grille (2). The actuator (6) can make an angular rotational movement on the fixed grille (2) towards inside of the vehicle by means of the connection hole (6.2). A blocking lug (6.3) is provided on the inner surface of the connection plate (6.1). The blocking lug (6.3) enables connection of the resilient member (8) to the actuator (6) (Figure 14). The resilient member (8) is connected from one end thereof to the obstruction extension (2.2.2) provided on the fixed grille (2) and to the blocking lug (6.3) from the other end thereof, thereby enabling connection of the actuator (6) to the fixed grille (2). The lower movement extension (6.4) is located on the connection plate (6.1). The lower movement extension (6.4) preferably has a cylindrical geometric form. The lower movement extension (6.4) enables connection of the motion lever (7) to the actuator (6). The lower movement extension (6.4) is located on the connection plate (6.1) in line with the connection hole (6.2). The lower movement extension (6.4) is engaged to one end of the motion lever (7). A holding space (6.5) is provided preferably in the center of the lower part of the rectangular body of the actuator (6). The holding space (6.5) preferably has a rectangular geometric form. The holding space (6.5) is used when the user prefers to open the actuator (6). The user holds the holding space (6.5) of the actuator (6) and applies force on the actuator (6). The user holds the holding space (6.5) of the actuator (6) to rotate the actuator (6) around the central axis. The actuator (6) can move together with the moveable grille (4) by means of the motion lever (7).

In one embodiment of the invention, the motion lever (7) provided in the grille mechanism (1) is connected from one end to the moveable grille (4) and from the other end to the actuator (6). The motion lever (7) enables the movable grille (4) and the actuator (6) to trigger the movements of each other during opening and closing thereof. The motion lever (7) enables the movable grille (4) to be opened and closed simultaneously with the actuator (6) when the actuator (6) is being opened and closed on the fixed grille (2). There are two motion holes (7.1) on the motion lever (7). The movable grille (4) and the actuator (6) are connected to the motion lever (7) by means of the motion holes (7.1) (Figures 13-14). The motion lever (7) preferably has a U geometric form. There are motion holes (7.1) on both ends of the motion lever (7). The motion lever (7) enables connection of the actuator (6) and the moveable grille (4) to each other. The motion lever (7) enables simultaneous operation of the movable grille (4) and the actuator (6). The motion lever (7) is fixed to the moveable grille (4) by engaging the upper movement extension (4.2) into the motion hole (7.1) on one end thereof. The motion lever (7) is fixed to the actuator (6) by engaging the lower movement extension (6.4) into the motion hole (7.1) provided on the other end thereof. The motion lever (7) is arranged on two ends of the movable grille (4) and the actuator (6). The motion lever (7) enables the actuator (6), which is moved by applying force, to move the movable grille (4) simultaneously. The movable grille (4) and the actuator (6), which are connected to each other by the motion lever (7), are opened by making a rotational movement from the upper movement extension (4.2) and the lower movement extension (6.4) by which they are connected to the motion lever (7). When force is applied to the actuator (6), the actuator (6) makes a rotational movement in such a way that it is folded from the lower movement extension (6.4) towards the inside of the vehicle. Since they are connected to each other via the motion lever (7), the movable grille moves (4) together with the actuator (6). The movable grille (4) is opened by making a rotational movement from its lower surface into the vehicle such that it is connected to the fixed grille (2) via the connection extension (4.1). The motion lever (7) enables the movable grille (4) and the actuator (6) to open in the fixed grille (2) by making rotational movements in opposite directions to each other. The movable grille (4) and the actuator (6) which are opened together by means of the motion lever (7) enable to form a step opening (B) in front of the step (3).

In one embodiment of the invention, the resilient member (8) provided in the grille mechanism (1) prevents the moveable grille (4) and the actuator (6) from being closed without exertion of a force when they are open on the fixed grille (2) and prevents them from being opened without exertion of a force when they are closed. The resilient member (8) is preferably produced from a material that can undergo elastic deformation. In this embodiment of the invention, the resilient member (8) is produced from rubber material. There are engagement holes (8.1) on both ends of the resilient lever (8). While the engagement hole (8.1) on one end of the resilient member (8) preferably has a circular geometric form, the one on the other end has a slot geometric form. The resilient member (8) is fixed to fixed grille (2) upon being engaged to the obstruction extension (2.2.2) from one end thereof. The resilient member (8) is connected to the actuator (6) upon being engaged to the blocking lug (6.3) from the other end thereof (Figures 13-14). After the actuator (6) is opened by applying force on it, the resilient member (8) prevents the actuator (6) from being closed when it is open without applying a force thereon. Likewise, the resilient member (8) prevents the actuator (6) from being opened when in closed position without applying force thereon. The resilient member (8) stretches and serves as a tension spring when the actuator (6) is opened. For this reason, the actuator (6) which is opened remains fixed in the open position. Likewise, the resilient member (8) ensures that the actuator (6) remains in a fixed position by preventing it from being opened without applying a force thereon when it is closed with its normal tension state.

Operation of the grille mechanism (1) in this embodiment of the invention takes place as follows. When the user prefers to step on the step (3) to reach the front part of the vehicle, a step opening (B) is formed in front of the step (3). The grille mechanism (1) must be opened to form the step opening (B). A force is applied to the actuator (6) to switch the grille mechanism (1) from the closed position to the open position. The user holds the holding space (6.5) of the actuator (6) and applies force on the actuator (6). The actuator (6) makes a rotational movement on the fixed grille (2) under the influence of the force applied thereon. The actuator (6) is opened by making a rotational movement on the fixed grille (2) towards the inside of the vehicle. The movable grille (4), to which the motion lever (7) is connected, also rotates with the rotational movement of the actuator (6). The movable grille (4) is opened by rotating in the opposite direction with the actuator (6). Upon opening of the movable grille (4) and the actuator (6), a step opening (B) is formed in front of the step (3). When the actuator (6) is opened, it is ensured to remain in the fixed position by means of the resilient member (8). When it is preferred to close the step (3) after use by the user, a force is applied to the actuator (6) in the closing direction. With the effect of the applied force, the actuator (6) returns to its original position and closes onto the fixed grille (2) becoming integrated with it. During the closing movement of the actuator (6), the movable grille (4) also rotates and closes on the fixed grille (2).

By means of the grille mechanism (1) of the present invention, a step opening (B) is enabled to be produced for the step (3) by using the actuator (6) and the movable grille (4) when the user prefers to reach the front part of the vehicle.

## Claims

1. A bumper having a grille mechanism (1) for providing ventilation, wherein the grille mechanism (1) is foldable and enables to provide a step opening (B) for the step (3) by being opened when the user prefers to reach the front part of the vehicle, **comprising**
- at least one fixed grille (2) fixedly arranged on the middle bumper (T),
- at least one step (3) which is positioned on the middle bumper (T) so as to remain between the middle bumper (T) and the fixed grille (2), and which enables the user to step thereon to reach the front part of the vehicle;
- at least one movable grille (4) and **characterized by**
- the movable grille (4), which is connected to the fixed grille (2), and which, by making a rotational movement around the central axis from its ends that are connected to the fixed grille (2), can be opened and closed on the fixed grille (2),
- at least one actuator (6), which is connected to the fixed grille (2) and the movable grille (4), moves simultaneously with the moveable grille (4), can be opened and closed on the fixed grille (2) by making a rotational movement around the central axis from the ends thereof connected to the fixed grille (2) when a force is applied thereon, and forms a step opening (B) for the step (3) when opened together with the moveable grille (4),
- at least one motion lever (7), which is connected to the moveable grille (4) from one end thereof and to the actuator (6) from the other end thereof, and which, when the moveable grille (4) and the actuator (6) are being opened and closed, enables them to trigger each other's movement and enables the moveable grille (4) to be opened and closed together with the actuator (6) simultaneously during opening and closing of the actuator (6) on the fixed grille (2),
- at least one resilient member (8), which prevents the moveable grille (4) and the actuator (6) on the fixed grille (2) from being closed without exertion of a force when they are open and prevents them from being opened without exertion of a force when they are closed wherein
- the fixed grille (2), which comprises an upper connection plate (2.1) and a lower connection plate (2.2) and is fixed to the middle bumper (T) such that the step opening (B) is provided above the step (3), and to which the movable grille (4) and the actuator (6) are connected so as to open and close the step opening (B).

2. The bumper having a grille mechanism (1) according to Claim 1, **characterized by** the upper connection plate (2.1) which comprises a rotation hole (2.1.1) and enables connection of the moveable grille (4) to the fixed grille (2).

3. The bumper having a grille mechanism (1) according to Claim 1, **characterized by** the lower connection plate (2.2), which comprises a rotation extension (2.2.1) enabling connection of the actuator (6) to the fixed grille (2) and an obstruction extension (2.2.2) enabling connection of the resilient member (8) to the fixed grille (2), and which enables connection of the actuator (6) to the fixed grille (2).

4. The bumper having a grille mechanism (1) according to Claim 1, **characterized by** the movable grille (4), which comprises a connection extension (4.1) and an upper movement extension (4.2), and the pores (5) on which are integrated with the pores (5) on the fixed grille (2) when the movable grille (4) is closed on the fixed grille (2).

5. The bumper having a grille mechanism (1) according to Claim 4, **characterized by** the connection extension (4.1), which is located at both ends of the movable grille (4), and by being engaged to the rotation hole (2.1.1) enables the movable grille (4) to be connected to the fixed grille (2) and to make a rotational movement around the central axis in the rotation hole (2.1.1).

6. The bumper having a grille mechanism (1) according to Claim 4, **characterized by** the upper movement extension (4.2) which is positioned in line with the connection extension (4.1) and enables connection of the motion lever (7) to the moveable grille (4).

7. The bumper having a grille mechanism (1) according to Claim 1, **characterized by** the actuator (6) comprising a connection plate (6.1), connection hole (6.2), blocking lug (6.3), lower movement extension (6.4) and holding space (6.5).

8. The bumper having a grille mechanism (1) according to Claim 7, **characterized by** the connection plate (6.1) which enables connection of the actuator (6) to the motion lever (7) and the fixed grille (2) and the connection hole (6.2) which is located on the connection plate (6.1) and enables connection of the actuator (6) to the fixed grille (2) by being engaged to the rotation extension (2.2.1) provided on the lower connection plate (2.2).

9. The bumper having a grille mechanism (1) according to Claim 7, **characterized by** the blocking lug (6.3) which is located on the inner surface of the connection plate (6.1) and enables connection of the resilient member (8) to the actuator (6).

10. The bumper having a grille mechanism (8) according to Claim 7, **characterized by** the lower movement extension (6.4), which is located on the connection plate (6.1) such that it is in line with the connection hole (6.2), and which is engaged to one end of the motion lever (7) and enables connection of the motion lever (7) to the actuator (6).

11. The bumper having a grille mechanism (1) according to Claim 7, **characterized by** the holding space (6.5), which is located in the center of the lower part of the rectangular body of the actuator (6), and which is used when the user prefers to open the actuator (6).

12. The bumper having a grille mechanism (1) according to Claim 1, **characterized by** the motion lever (7) which comprises a motion hole (7.1), and enables simultaneous operation of the moveable grille (4) and the actuator (6) and connection of the actuator (6) and the moveable grille (4) to each other also which is connected to the moveable grille (4) upon engaging the upper movement extension (4.2) to the motion hole (7.1) on one end thereof, and connected to the actuator (6) upon engaging the lower movement extension (6.4) to the motion hole (7.1) on the other end thereof; and which enables the actuator (6) that is moved by applying force to move the movable grille (4) simultaneously

13. The bumper having a grille mechanism (1) according to Claim 1, **characterized by** the movable grille (4) and the actuator (6), which are connected to each other by the motion lever (7), and which are opened by making a rotational movement from the upper movement extension (4.2) and the lower movement extension (6.4) by which they are connected to the motion lever (7).

14. The bumper having a grille mechanism (1) according to Claim 1, **characterized by** the motion lever (7), which enables the movable grille (4) and the actuator (6) to open in the fixed grille (2) by making rotational movements in opposite directions to each other, and which enables the movable grille (4) and the actuator (6) that are opened to form a step opening (B) in front of the step (3).

## Patentansprüche

1. Puffer mit einem Grillmechanismus (1) zum Bereitstellen der Ventilation, wobei der Grillmechanismus (1) faltbar ist und ermöglicht, eine Stufenöffnung (B) für die Stufe (3) beim Öffnen bereitzustellen, wenn der Nutzer es vorzieht, den vorderen Teil des Fahrzeugs zu erreichen, **umfassend**
- mindestens einen fest am mittleren Puffer (T) angeordneter befestigter Grill (2).
- mindestens eine Stufe (3), die auf dem mittleren Puffer (T) positioniert ist, um zwischen dem mittleren Puffer (T) und dem befestigten Grill (2) zu bleiben, und die es dem Nutzer ermöglicht, darauf zu treten, um den vorderen Teil des Fahrzeugs zu erreichen;
- mindestens einen beweglichen Grill (4) und **gekennzeichnet durch**
- den beweglichen Grill (4), der mit dem befestigten Grill (2) verbunden ist, und der durch eine Drehbewegung um die Mittelachse von seinen mit dem befestigten Grill (2) verbundenen Enden am befestigten Grill (2) geöffnet und geschlossen werden kann,
- mindestens einen Aktuator (6), der mit dem befestigten Grill (2) und dem beweglichen Grill (4) verbunden ist, sich gleichzeitig mit dem beweglichen Grill (4) bewegt, auf dem befestigten Grill (2) durch die Durchführung einer Drehbewegung um die Mittelachse von dessen mit dem befestigten Grill (2) verbundenen Enden geöffnet und geschlossen werden kann, wenn eine Kraft darauf ausgeübt wird, und bildet beim Öffnen zusammen mit dem beweglichen Grill (4) eine Stufenöffnung (B) für die Stufe (3),
- mindestens einen Bewegungshebel (7), der mit dem beweglichen Grill (4) von einem Ende davon und mit dem Aktuator (6) von seinem anderen Ende verbunden ist, und der, beim Öffnen und Schließen des beweglichen Grills (4) und des Aktuators (6), es denen ermöglicht, sich gegenseitig auszulösen und den beweglichen Grill (4) zusammen mit dem Aktuator (6) gleichzeitig beim Öffnen und Schließen des Aktuators (6) am befestigten Grill (2) zu öffnen und zu schließen,
- mindestens ein elastisches Element (8), das verhindert, dass der bewegliche Grill (4) und der Aktuator (6) am befestigten Gitter (2) beim Öffnen ohne Anstrengung geschlossen und verhindert, dass sie beim Schließen ohne Anstrengung geöffnet werden können, wobei
- den befestigten Grill (2), der eine obere Verbindungsplatte (2.1) und eine untere Verbindungsplatte (2.2) umfasst und an dem mittleren Puffer (T) so befestigt ist, dass die Stufenöffnung (B) oberhalb der Stufe (3) vorgesehen ist, und mit dem der bewegliche Grill (4) und der Aktuator (6) verbunden sind, um die Stufenöffnung (B) zu öffnen und zu schließen.

2. Puffer mit einem Grillmechanismus (1) nach Anspruch 1, **gekennzeichnet durch** die obere Verbindungsplatte (2.1), die ein Drehloch (2.1.1) umfasst und die Verbindung des beweglichen Grills (4) mit dem befestigten Grill (2) ermöglicht.

3. Puffer mit einem Grillmechanismus (1) nach Anspruch 1, **gekennzeichnet durch** die untere Verbindungsplatte (2,2), die eine Dreherstreckung (2.2.1), die eine Verbindung des Aktuator (6) mit dem befestigt Grill (2) ermöglicht und eine Hinderniserstreckung (2.2.2), die eine Verbindung des elastischen Elements (8) mit dem befestigten Grill (2) ermöglicht, und die die Verbindung des Aktuators (6) mit dem befestigten Grill (2) ermöglicht.

4. Puffer mit einem Grillmechanismus (1) nach Anspruch 1, **gekennzeichnet durch** den beweglichen Grill (4), der eine Verbindungserstreckung (4.1) und eine obere Bewegungserstreckung (4.2) umfasst, und die Poren (5), die mit den Poren (5) am befestigten Grill (2) integriert sind, wenn der bewegliche Grill (4) am befestigten Grill (2) geschlossen ist.

5. Puffer mit einem Grillmechanismus (1) nach Anspruch 4, **gekennzeichnet durch** die Verbindungserstreckung (4.1), die an beiden Enden des beweglichen Grills (4) angeordnet ist, und durch Eingriff mit dem Drehloch (2.1.1) ermöglicht, dass der bewegliche Grill (4) mit dem befestigten Grill (2) verbunden wird und eine Drehbewegung um die Mittelachse im Drehloch (2.1.1) ausführt.

6. Puffer mit einem Grillmechanismus (1) nach Anspruch 4, **gekennzeichnet durch** die obere Bewegungserstreckung (4.2), die parallel zur Verbindungserstreckung (4.1) positioniert ist und die die Verbindung des Bewegungshebels (7) mit dem beweglichen Grill (4) ermöglicht.

7. Puffer mit einem Grillmechanismus (1) nach Anspruch 1, **gekennzeichnet durch** der Aktuator (6) umfassend eine Verbindungsplatte (6.1), Verbindungsloch (6.2), Sperrnocken (6.3), untere Bewegungserstreckung (6.4) und Halteraum (6.5).

8. Puffer mit einem Grillmechanismus (1) nach Anspruch 7, **gekennzeichnet durch** die Verbindungsplatte (6.1), die die Verbindung des Aktuators (6) an den Bewegungshebel (7) und der befestigte Grill (2) und das Verbindungsloch (6.2), die auf der Verbindungsplatte (6.1) angeordnet ist und durch Eingriff in die an der unteren Verbindungsplatte (2.2) vorgesehene Dreherstreckung (2.2.1) die Verbindung des Aktuators (6) mit dem befestigten Grill (2) ermöglicht, bereitstellt.

9. Puffer mit einem Grillmechanismus (1) nach Anspruch 7, **gekennzeichnet durch** den Sperrnocken (6.3), die an der inneren Oberfläche der Verbindungsplatte (6.1) angeordnet ist und die Verbindung des elastischen Elements (8) mit dem Aktuator (6) ermöglicht.

10. Puffer mit einem Grillmechanismus (8) nach Anspruch 7, **gekennzeichnet durch** die untere Bewegungserstreckung (6.4), die auf der Verbindungsplatte (6.1) so angeordnet ist, dass sie parallel zum Verbindungsloch (6.2) ist, und die mit einem Ende des Bewegungshebels (7) in Eingriff steht und eine Verbindung des Bewegungshebels (7) mit dem Aktuator (6) ermöglicht.

11. Puffer mit einem Grillmechanismus (1) nach Anspruch 7, **gekennzeichnet durch** den Halteraum (6.5), die in der Mitte des unteren Teils des rechteckigen Körpers des Aktuators (6) angeordnet ist, und die verwendet wird, wenn der Nutzer es vorzieht, den Aktuator (6) zu öffnen.

12. Puffer mit einem Grillmechanismus (1) nach Anspruch 7, **gekennzeichnet durch** den Bewegungshebel (7), der ein Bewegungsloch (7.1) umfasst, und eine gleichzeitige Betätigung des beweglichen Grills (4) und des Aktuators (6) und die Verbindung des Aktuators (6) und des beweglichen Grills (4) auch miteinander ermöglicht, die mit dem beweglichen Grill (4) verbunden ist, wenn die obere Bewegungserstreckung (4.2) mit dem Bewegungsloch (7.1) an einem Ende davon in Eingriff gebracht wird und mit dem Aktuator (6) verbunden ist, wenn die untere Bewegungserstreckung (6.4) mit dem Bewegungsloch (7.1) an dem anderen Ende davon in Eingriff gebracht wird; und der es dem durch Kraftanwendung bewegten Aktuator (6) ermöglicht, den beweglichen Grill (4) gleichzeitig zu bewegen.

13. Puffer mit einem Grillmechanismus (1) nach Anspruch 1, **gekennzeichnet durch** den beweglichen Grill (4) und den Aktuator (6), die durch den Bewegungshebel (7) miteinander verbunden sind, und die durch eine Drehbewegung von der oberen Bewegungserstreckung (4.2) und der unteren Bewegungserstreckung (6.4) geöffnet werden, über die sie mit dem Bewegungshebel (7) verbunden sind.

14. Puffer mit einem Grillmechanismus (1) nach Anspruch 1, **gekennzeichnet durch** den Bewegungshebel (7), der es dem beweglichen Grill (4) und dem Aktuator (6) ermöglicht, sich im befestigten Grill (2) zu öffnen, indem sie Drehbewegungen in entgegengesetzte Richtungen ausführen, und der ermöglicht, dass der bewegliche Grill (4) und der Aktuator (6), die geöffnet sind, eine Stufenöffnung (B) vor der Stufe (3) bilden.

## Revendications

1. Pare-chocs ayant un mécanisme de grille (1) pour fournir ventilation, dans lequel le mécanisme de grille (1) est pliable et permet de fournir une ouverture de marche (B) pour la marche (3) en étant ouverte lorsque l'utilisateur préfère atteindre la partie avant du véhicule, **comprenant**
- au moins une grille fixe (2) disposée de manière fixe sur le pare-chocs intermédiaire (T),
- au moins une marche (3) qui est positionnée sur le pare-chocs intermédiaire (T) de manière à rester entre le pare-chocs intermédiaire (T) et la grille fixe (2), et qui permet à l'utilisateur d'y monter pour atteindre la partie avant du véhicule ;
- au moins une grille mobile (4) et **caractérisé par**
- la grille mobile (4), qui est connectée à la grille fixe (2), et qui, en effectuant un mouvement de rotation autour de l'axe central depuis ses extrémités qui sont connectées à la grille fixe (2), peut être ouverte et fermée sur la grille fixe (2),
- au moins un actionneur (6), qui est connecté à la grille fixe (2) et à la grille mobile (4), se déplace simultanément avec la grille mobile (4), peut être ouvert et fermé sur la grille fixe (2) en effectuant un mouvement de rotation autour de l'axe central à partir de ses extrémités connectées à la grille fixe (2) lorsqu'une force est appliquée sur celui-ci, et forme une ouverture de marche (B) pour la marche (3) lorsqu'il est ouvert conjointement avec la grille mobile (4),
- au moins un levier de mouvement (7), qui est connecté à la grille mobile (4) à partir d'une extrémité de celui-ci et à l'actionneur (6) à partir de l'autre extrémité de celui-ci, et qui, lorsque la grille mobile (4) et l'actionneur (6) sont ouverts et fermés, leur permet de déclencher le mouvement l'un de l'autre et permet à la grille mobile (4) d'être ouverte et fermée avec l'actionneur (6) simultanément pendant l'ouverture et la fermeture de l'actionneur (6) sur la grille fixe (2),
- au moins un élément élastique (8), qui empêche la fermeture de la grille mobile (4) et de l'actionneur (6) sur la grille fixe (2) sans exercer d'une force lorsqu'ils sont ouverts et les empêche de s'ouvrir sans exercer d'une force lorsqu'ils sont fermés, dans lequel
- la grille fixe (2), qui comprend une plaque de connexion supérieure (2.1) et une plaque de connexion inférieure (2.2) et est fixée au pare-chocs intermédiaire (T) de telle sorte que l'ouverture de marche (B) est prévue au-dessus de la marche (3), et à laquelle la grille mobile (4) et l'actionneur (6) sont connectés de manière à ouvrir et fermer l'ouverture de marche (B).

2. Pare-chocs ayant un mécanisme de grille (1) selon la revendication 1, **caractérisé par** la plaque de connexion supérieure (2.1) qui comprend un trou de rotation (2.1.1) et permet la connexion de la grille mobile (4) à la grille fixe (2).

3. Pare-chocs ayant un mécanisme de grille (1) selon la revendication 1, **caractérisé par** la plaque de connexion inférieure (2.2) qui comprend une extension de rotation (2.2.1) permettant la connexion de l'actionneur (6) à la grille fixe (2) et une extension d'obstruction (2.2.2) permettant la connexion de l'élément élastique (8) à la grille fixe (2), et qui permet la connexion de l'actionneur (6) à la grille fixe (2).

4. Pare-chocs ayant un mécanisme de grille (1) selon la revendication 1, **caractérisé par** la grille mobile (4), qui comprend une extension de connexion (4.1) et une extension de mouvement supérieure (4.2), et dont les pores (5) sont intégrés aux pores (5) sur la grille fixe (2) lorsque la grille mobile (4) est fermée sur la grille fixe (2).

5. Pare-chocs ayant un mécanisme de grille (1) selon la revendication 4, **caractérisé par** l'extension de connexion (4.1), qui est située aux deux extrémités de la grille mobile (4), et en étant engagée au trou de rotation (2.1.1) permet à la grille mobile (4) d'être connectée à la grille fixe (2) et d'effectuer un mouvement de rotation autour de l'axe central dans le trou de rotation (2.1.1).

6. Pare-chocs ayant un mécanisme de grille (1) selon la revendication 4, **caractérisé par** l'extension supérieur de mouvement (4.2) qui est positionnée en ligne avec l'extension de connexion (4.1) et permet la connexion du levier de mouvement (7) à la grille mobile (4).

7. Pare-chocs ayant un mécanisme de grille (1) selon la revendication 1, **caractérisé par** l'actionneur (6) comprend une plaque de connexion (6.1), un trou de connexion (6.2), une patte de blocage (6.3), une extension de mouvement inférieure (6.4) et un espace de maintien (6.5).

8. Pare-chocs ayant un mécanisme de grille (1) selon la revendication 7, **caractérisé par** la plaque de connexion (6.1) qui permet la connexion de l'actionneur (6) au levier de mouvement (7) et à la grille fixe (2) et le trou de connexion (6.2) qui est situé sur la plaque de connexion (6.1) et permet la connexion de l'actionneur (6) à la grille fixe (2) en étant engagé à l'extension de rotation (2.2.1) prévue sur la plaque de connexion inférieure (2.2).

9. Pare-chocs ayant un mécanisme de grille (1) selon la revendication 7, **caractérisé par** la patte de blocage (6.3) qui est située sur la surface intérieure de la plaque de connexion (6.1) et permet la connexion de l'élément élastique (8) à l'actionneur (6).

10. Pare-chocs ayant un mécanisme de grille (8) selon la revendication 7, **caractérisé par** l'extension de mouvement inférieure (6.4), qui est située sur la plaque de connexion (6.1) de telle sorte qu'elle est alignée avec le trou de connexion (6.2), et qui est engagée à une extrémité du levier de mouvement (7) et permet la connexion du levier de mouvement (7) à l'actionneur (6).

11. Pare-chocs ayant un mécanisme de grille (1) selon la revendication 7, **caractérisé par** l'espace de maintien (6.5), qui est situé au centre de la partie inférieure du corps rectangulaire de l'actionneur (6), et qui est utilisé lorsque l'utilisateur préfère ouvrir l'actionneur (6).

12. Pare-chocs ayant un mécanisme de grille (1) selon la revendication 1, **caractérisé par** le levier de mouvement (7) qui comprend un trou de mouvement (7.1), et permet le fonctionnement simultané de la grille mobile (4) et de l'actionneur (6) et la connexion de l'actionneur (6) et de la grille mobile (4) l'un à l'autre également qui est connecté à la grille mobile (4) lors de l'engagement de l'extension de mouvement supérieure (4.2) au trou de mouvement (7.1) sur l'une de ses extrémités, et connecté à l'actionneur (6) lors de l'engagement de l'extension de déplacement inférieure (6.4) au trou de mouvement (7.1) sur son autre extrémité ; et qui permet à l'actionneur (6) qui est déplacé en appliquant une force de déplacer la grille mobile (4) simultanément.

13. Pare-chocs ayant un mécanisme de grille (1) selon la revendication 1, **caractérisé par** la grille mobile (4) et l'actionneur (6), qui sont connectés l'un à l'autre par le levier de mouvement (7), et qui sont ouverts en effectuant un mouvement de rotation à partir de l'extension de mouvement supérieure (4.2) et de l'extension de mouvement inférieure (6.4) par lesquelles ils sont connectés au levier de mouvement (7).

14. Pare-chocs ayant un mécanisme de grille (1) selon la revendication 1, **caractérisé par** le levier de mouvement (7), qui permet à la grille mobile (4) et à l'actionneur (6) de s'ouvrir dans la grille fixe (2) en effectuant des mouvements de rotation dans des directions opposées l'une à l'autre, et qui permet à la grille mobile (4) et à l'actionneur (6) qui sont ouverts de former une ouverture de marche (B) devant la marche (3).
